(19) Europäisches Patentamt
European Patent Office
Office européen des brevets

(11) Veröffentlichungsnummer: **0 009 191 B1**

(12) # EUROPÄISCHE PATENTSCHRIFT

(45) Veröffentlichungstag der Patentschrift: **05.05.82**

(51) Int. Cl.³: **C 09 B 31/043,** C 09 B 43/20, D 06 P 3/48, D 06 P 3/54 // C07C107/06

(21) Anmeldenummer: **79103356.6**

(22) Anmeldetag: **07.09.79**

(54) **Wasserunlösliche Disazofarbstoffe, ihre Herstellung und Verwendung.**

(30) Priorität: **15.09.78 DE 2840199**

(43) Veröffentlichungstag der Anmeldung: **02.04.80 Patentblatt 80/7**

(45) Bekanntmachung des Hinweises auf die Patenterteilung: **05.05.82 Patentblatt 82/18**

(84) Benannte Vertragsstaaten: **BE CH DE FR GB IT**

(56) Entgegenhaltungen:
**FR-A-757 090**
**GB-A-425 307**
**US-A-2 359 305**
**US-A-2 386 599**
**US-A-3 667 897**

(73) Patentinhaber: **CASSELLA Aktiengesellschaft, Hanauer Landstrasse 526, D-6000 Frankfurt am Main 61 (DE)**

(72) Erfinder: **Bühler, Ulrich, Dr., Nidderauer Strasse 13, D-6369 Schöneck 1 (DE)**
Erfinder: **Heinrich, Ernst, Dr., Ernst-Reuter-Strasse 23, D-6078 Neu-Isenburg (DE)**
Erfinder: **Ribka, Joachim, Dr., Rügener Strasse 4, D-6050 Offenbach/Main (DE)**
Erfinder: **Tappe, Horst, Dr., Ringstrasse 9, D-6057 Dietzenbach (DE)**
Erfinder: **Kosubek, Uwe, Am Vogelanger 28, D-6087 Büttelborn 2/Klein Gerau (DE)**
Erfinder: **Löwenfeld, Rudolf, Dr., Quellenweg 2, D-6072 Dreieich (DE)**

(74) Vertreter: **Urbach, Hans-Georg, Dr. et al, Hanauer Landstrasse 526, D-6000 Frankfurt am Main 61 (DE)**

**EP 0 009 191 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Wasserunlösliche Disazofarbstoffe, ihre Herstellung und Verwendung

Die vorliegende Erfindung betrifft wasserunlösliche Disazofarbstoffe der Formel I

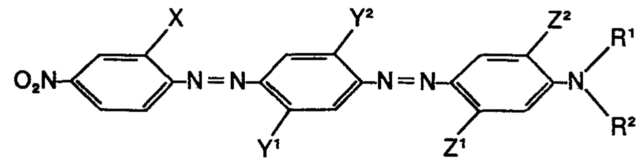

(I)

worin

X Wasserstoff, Alkyl mit 1 bis 3 C-Atomen, Chlor, Brom, Nitro oder Cyan; $Y^1$ und $Y^2$ unabhängig voneinander Alkyl mit 1 bis 3 C-Atomen oder Alkoxy mit 1 bis 3 C-Atomen bedeuten und, sofern X eine Nitro- oder Cyangruppe ist, $Y^1$ auch noch Alkanoylamino mit insgesamt 1 bis 3 C-Atomen im Alkanoylrest und $Y^2$ Wasserstoff oder Chlor bedeutet; $Z^1$ und $Z^2$ Wasserstoff, Alkyl mit 1 bis 3 C-Atomen, Chlor, Brom, oder Alkoxy mit 1 bis 3 C-Atomen mit der Einschränkung, dass eine der Bedeutungen von $Z^1$ und $Z^2$ Wasserstoff ist; $R^1$ eine durch Alkoxy mit 1 bis 4 C-Atomen, Alkanoyloxy mit insgesamt 1 bis 4 C-Atomen, Alkylaminocarbonyloxy mit 1 bis 4 C-Atomen in der Alkylgruppe, β-Hydroxyäthoxy, β-Alkoxyethoxy mit 1 bis 4 C-Atomen in der Alkoxygruppe, oder Alkoxycarbonyl mit 1 bis 4 C-Atomen in der Alkoxygruppe substituierte Äthylgruppe, $R^2$ Alkyl mit 1 bis 4 C-Atomen, Alkenyl mit 3 oder 4 C-Atomen, Hydroxyethoxyethyl oder Alkoxyethoxyethyl mit 1 bis 4 C-Atomen in der Alkoxygruppe.

Wasserunlösliche Disazofarbstoffe, die zum Färben und Bedrucken von Textilmaterialien aus hydrophoben Fasern verwendet werden können, sind aus zahlreichen Druckschriften bekannt. Vorzugsweise wurden derartige Farbstoffe zur Einstellung grauer und graublauer Nuancen eingesetzt.

Aus der US-PS 3 667 897 sind Mono- und Disazofarbstoffe bekannt, welche mindestens 4 aromatische Ringe enthalten. Diese Forderung wird entweder dadurch erfüllt, dass im Falle von Mono-Azofarbstoffen sowohl die Diazokomponente als auch die Kupplungskomponente der Naphthalinreihe angehören, im Falle von Disazofarbstoffen mindestens eine der beiden genannten Komponenten ein Naphthalin-Derivat ist, oder aber diese Forderung wird dadurch erfüllt, dass bei Monoazofarbstoffen mindestens zwei, bei Disazofarbstoffen mindestens einer der Substituenten des Chromophors einen Phenylkern enthält. Farbstoffe mit solcher relativ sperrigen Struktur sind für das Färben nach den üblichen Färbemethoden, insbesondere auch nach dem Verfahren der Carrier- und HT-Färbung schlecht geeignet. Sie dienen vielmehr einem speziellen Zweck, nämlich dem gleichzeitigen Färben von Polyester- und Baumwollfasern nach einem speziellen Färbeverfahren und unter Zuhilfenahme spezieller Färbehilfsmittel. Ein wesentliches Merkmal dieses Verfahrens ist die Mitverwendung eines Lösungsmittels für den Dispersionsfarbstoff, welches gleichzeitig zur Quellung der Zellulosefasern dient und auch bis zu einem gewissen Grade als Fixier-Hilfsmittel für das Aufziehen des Farbstoffs auf die Polyester-Faser wirkt.

In der Regel ist nach Abschluss dieses Färbeprozesses eine Nachreinigung der gefärbten Textilmaterialien mit einem organischen Lösungsmittel, wie beispielsweise Trichlorethylen, erforderlich, um nicht fixierte, auf der Oberfläche der Fasern haftende Farbstoffanteile zu entfernen.

Aus der US-PS 2 359 305 sind Mono- und Disazofarbstoffe bekannt, die bedingungsgemäss an einer sekundären Aminogruppe der Kupplungskomponente einen Hydroxyethoxyethylrest als Substituenten aufweisen. Auch diese Farbstoffe haben für die Praxis ein unbefriedigendes Ausziehvermögen, sowohl beim Färben nach dem HT-Verfahren als auch besonders beim Färben nach dem Carrier-Verfahren. Nach beiden Verfahren verbleibt nach der üblichen Färbezeit zu viel Farbstoff in der Färbeflotte, die Farbausbeute auf dem Substrat wird damit deutlich verringert, der Farbstoffverlust ist gross, und die Kosten für die Abwasserklärung sind hoch.

Die GB-PS 425 307 betrifft Diazofarbstoffe, vorzugsweise solche mit einer Diazokomponente der Benzol- oder Naphthalinreihe, einer Mittelkomponente, die vorzugsweise der Benzol- oder Naphthalinreihe angehört, mit Ausnahme von 2,5-Dialkoxyanilin und einer Kupplungskomponente der Benzolreihe, die eine Aminogruppe mit mindestens einer Hydroxyethylgruppe aufweist.

Auch diese bekannten Farbstoffe ziehen sowohl nach dem HT-Verfahren als auch nach dem Carrier-Verfahren zu schlecht aus den Farbflotten aus. Die Farbausbeute auf dem Substrat wird dadurch deutlich verringert, der Farbstoff-Verlust und die Kosten für die Klärung des Färbereiabwassers machen ihren Einsatz unwirtschaftlich. Ferner stehen diese bekannten Farbstoffe gegenüber den Farbstoffen vorliegender Erfindung in der Lichtechtheit deutlich zurück.

Die FR-PS 757 090 betrifft Disazofarbstoffe mit einer Diazokomponente der Benzol- oder Naphthalinreihe und 2,5-Dialkoxyanilin als Mittelkomponente, deren Kupplungskomponente eine Aminogruppe mit einer oder zwei β-Hydroxyethylgruppen aufweist. Auch diese Farbstoffe weisen im Vergleich zu erfindungsgemässen Farbstoffen ein relativ geringes Ausziehvermögen, und darüber hinaus auch eine erhebliche schlechtere Trockenhitzefixierechtheit auf.

Diese Farbstoffe sind daher nicht nur im Hinblick auf die Farbausbeute nicht befriedigend,

sondern sie können auch nur beschränkt nach dem sog. Thermosolverfahren appliziert werden.

Die US-PS 2 386 599 betrifft Mono- und Disazofarbstoffe, die in der Kupplungskomponente mindestens eine Dihydroxyalkylgruppe aufweisen.

Diese Farbstoffe sind – möglicherweise aufgrund der bei dieser Struktur recht wahrscheinlichen Neigung zur Ausbildung von Wasserstoffbrückenbindungen – relativ hydrophil und ergeben im Vergleich zu erfindungsgemässen Farbstoffen auf hydrophoben synthetischen Fasern relativ farbschwache Färbungen. Vergleicht man die Farbstärke dieser bekannten Farbstoffe visuell unter Zuhilfenahme sogenannter Hilfstypen, so ergibt sich, dass bei Einsatz gleicher Farbstoffmengen die bekannten Farbstoffe nur etwa $^1/_3$ der Richttyptiefen liefern wie erfindungsgemässe. Daraus folgt, dass zur Herstellung von Färbungen gleicher Farbsättigung von dem erfindungsgemässen Farbstoff nur etwa $^1/_3$ der Farbstoffmenge eingesetzt werden muss wie von dem bekannten. Auch die Trockenhitzefixierechtheit der bekannten Farbstoffe ist deutlich geringer als die erfindungsgemässer Farbstoffe.

Die bekannten Farbstoffe haben somit technische Nachteile, die ihren Einsatz beschränken, wobei vor allem ihr unzureichendes Ziehvermögen aber auch ihre nicht befriedigende Licht- und Trockenhitzefixierechtheit zu nennen ist. Insbesondere das unzureichende Ziehvermögen ist ein technischer Nachteil, der den Einsatz der bekannten Farbstoffe zur Herstellung tief gefärbter marineblauer und schwarzer Färbungen und Drucke erschwert bzw. unmöglich macht. Zur Überwindung dieser Schwierigkeit ist daher bereits vorgeschlagen worden und bekannt, Mischungen von wasserunlöslichen Disazofarbstoffen beim Herstellen tiefgefärbter Blau- und Blaugrautöne zu verwenden.

Dieses Verfahren ergibt zwar eine merkliche Verbesserung des Farbaufbaus und der erreichbaren Farbtiefe, bringt jedoch erhebliche Schwierigkeiten beim Färben nach modernen Kontinueverfahren mit sich, die auf die unterschiedliche Aufziehgeschwindigkeit der einzelnen Komponenten der Farbstoffmischungen zurückzuführen sind.

Im Hinblick auf die gravierenden technischen Nachteile der bekannten wasserunlöslichen Disazofarbstoffe war es nicht vorherzusehen und daher höchst überraschend, dass die Farbstoffe der vorliegenden Erfindung die Nachteile der bekannten Farbstoffe nicht aufweisen und ein erheblich verbessertes Aufziehvermögen sowie sehr gute Echtheitseigenschaften, insbesondere sehr gute Licht- und Trockenhitzefixierechtheit haben.

In obigen Definitionen genannte Alkylgruppen mit 1–3 C-Atomen sind Methyl, Äthyl, Propyl und Isopropyl; Alkylgruppen mit 4 Kohlenstoffatomen sind Butyl-(1), Butyl-(2), 2-Methyl-propyl-(1) und 2-Methyl-propyl-(2).

In obigen Definitionen genannte Alkoxygruppen mit 1–3 Kohlenstoffatomen sind Methoxy, Äthoxy, Propoxy und Isopropoxy.

Obengenannte Alkenylgruppen mit 3 oder 4 Kohlenstoffatomen sind Propen-2-yl-(1), Buten-2-yl-(1), Buten-3-yl-(1), Buten-3-yl-(2) und 2-Methylpropen-2-yl-(1).

Alkanoylaminogruppen mit 1–3 Kohlenstoffatomen im Alkanoylrest sind Formylamino, Acetylamino, Propionylamino. Die Acylreste der Alkanoyloxygruppen mit 1 bis 4 C-Atomen, die als Substituenten der für $R^1$ stehenden Äthylgruppe in Betracht kommen, sind Formyl, Acetyl, Propionyl, Butyryl, Isobutyryl.

Alkylaminocarbonyloxygruppen mit 1 bis 4 C-Atomen in der Alkylgruppe haben die Formel $-O-CO-NH-R^3$, wobei $R^3$ für Methyl, Äthyl, Propyl, Isopropyl, Butyl, Isobutyl, sec.-Butyl oder tert.-Butyl steht.

Alkoxycarbonylgruppen mit 1 bis 4 C-Atomen in der Alkoxygruppe sind Methoxycarbonyl, Äthoxycarbonyl, Propoxycarbonyl, Isopropoxycarbonyl, Butoxycarbonyl, Isobutoxycarbonyl, sec.-Butoxycarbonyl und tert.-Butoxycarbonyl.

Bevorzugt im Hinblick auf die anwendungstechnischen Eigenschaften sind solche erfindungsgemässen Farbstoffe der Formel I, in denen für X, $Y^1$, $Y^2$, $Z^1$ oder $Z^2$ stehende Alkylgruppen Methylgruppen und für $Y^1$ und $Y^2$ stehende Alkoxygruppen Methoxygruppen sind.

Eine weitere bevorzugte Gruppe von Farbstoffen der Formel I sind solche, in denen X Wasserstoff, Methyl, Nitro oder Cyan bedeutet.

Im Hinblick auf vorteilhafte anwendungstechnische Eigenschaften bevorzugt sind auch solche erfindungsgemässen Farbstoffe der Formel I, in denen $Y^1$ und $Y^2$ Methoxy oder Methyl und solche, in denen $Y^1$ Alkanoylamino mit 1 bis 3 C-Atomen und $Y^2$ Wasserstoff oder Chlor bedeuten.

Besonders bevorzugt sind solche erfindungsgemässen Farbstoffe der Formel I, in denen obengenannte bevorzugte Merkmale kombiniert sind, insbesondere solche, in denen X Wasserstoff und $Y^1$ und $Y^2$ Methoxy oder Methyl bedeuten, ferner solche, in denen X Methyl und $Y^1$ und $Y^2$ Methoxy bedeuten, solche, in denen X Nitro, $Y^1$ Acetylamino und $Y^2$ Chlor bedeuten, und schliesslich solche, in denen X H, $CH_3$ und CN und $Y^1/Y^2$ eine der folgenden Kombinationen ist: $OCH_3/OCH_3$; $CH_3/OCH_3$.

Die erfindungsgemässen Farbstoffe der Formel I werden in an sich bekannter Weise hergestellt, indem man eine Aminoazoverbindung der Formel II

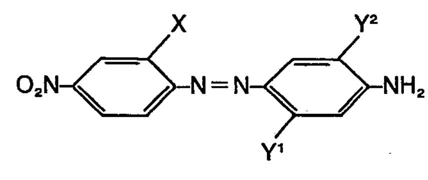

(II)

in an sich bekannter Weise diazotiert und die erhaltene Diazoniumverbindung auf ein Anilinderivat der Formel III

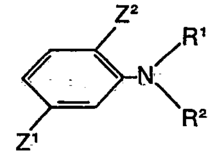

(III)

gekuppelt wird.

Die Diazotierung der Aminoazobenzole der Formel II geschieht in an sich bekannter Weise durch Einwirkung von salpetriger Säure oder salpetrige Säure abspaltenden Verbindungen. Beispielsweise können die Aminoazobenzole in Schwefelsäure, Salzsäure oder in niederen aliphatischen Karbonsäuren, wie z.B. Essigsäure oder Propionsäure, gelöst werden und bei 0 bis 60°C durch Zusatz von Nitrosylschwefelsäure bzw. Natriumnitrit diazotiert werden. Die Kupplung wird im sauren wässrigen Medium bzw. in einer Mischung aus Wasser und einem in Wasser wenig löslichen Alkohol, wie n- oder i-Butanol, bei Temperaturen von 0 bis 30°C ausgeführt. Bevorzugt wird hierbei der Temperaturbereich von 0 bis 5°C. Zur Vervollständigung der Kupplungsreaktion kann es zweckmässig sein, den pH-Wert des Kupplungssatzes gegen Ende der Reaktion durch Zusatz von Alkalien, wie z.B. von Natriumacetat auf einen Wert von 3 bis 6 zu puffern. Es kann im Hinblick auf die Formierung der Dispersionsfarbstoffe oder hinsichtlich ihrer Farbausbeute von Vorteil sein, ein Gemisch von zwei oder mehreren Aminoazoverbindungen der Formel II zu diazotieren und mit einem oder mehreren Anilinderivaten der Formel III zu kuppeln oder eine diazotierte Aminoazoverbindung der Formel II mit zwei oder mehreren Anilinderivaten der Formel III zu kuppeln oder zwei oder mehrere auf getrenntem Wege dargestellte Einzelfarbstoffe zu mischen.

Eine besonders vorteilhafte Ausführungsform der Herstellung der Farbstoffe der Formel I besteht darin, als Aminoazoverbindung der Formel III das Rohprodukt derselben einzusetzen, d.h. ohne Zwischenisolierung der Aminoazoverbindung zu arbeiten. In diesem Fall wird ein aromatisches Amin der allgemeinen Formel A–$NH_2$ in üblicher Weise diazotiert und auf ein aromatisches Amin der Formel IV

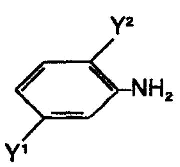 (IV)

gekuppelt, wobei die Reaktionsbedingungen von Diazotierung und Kupplung den oben angegebenen an sich bekannten entsprechen. Nach Beendigung der Kupplungsreaktion wird die erhaltene Reaktionsmischung erforderlichenfalls wieder stärker angesäuert, so dass erneut die Diazotierungsbedingungen hergestellt werden und dann wie mit einer Lösung der reinen Aminoazoverbindung der Formel III in oben beschriebener Weise weitergearbeitet. Bei dieser als Eintopfverfahren zu bezeichnenden Arbeitsweise werden alle Aufwendungen und Verluste, die mit der Isolierung der Aminoazoverbindung II verbunden sind, vermieden.

Für die Herstellung der erfindungsgemässen Farbstoffe sind Aminoazokomponenten der Formel II sehr wertvoll, bei denen X H, $CH_3$, Cl, Br, $NO_2$ oder CN ist und wobei jeweils die Reste $Y^1$ und $Y^2$ in folgender Kombination $Y^1/Y^2$ enthalten sind: $OCH_3/OCH_3$; $CH_3/OCH_3$; $CH_3/CH_3$; NH–$COCH_3$/H; NH–$COCH_3$/Cl; wobei besonders diejenigen, in denen X H, $CH_3$, CN oder $NO_2$ ist, bevorzugt sind.

Besonders wertvoll und bevorzugt sind die Kombinationen
$X/Y^1/Y^2$; H/$CH_3$/$OCH_3$;
$NO_2$/–$NHCOCH_3$/H; H/$OCH_3$/$OCH_3$;
$NO_2$/–$NHCOCH_3$/Cl; $CH_3$/$OCH_3$/$OCH_3$.

Für die Herstellung der erfindungsgemässen Farbstoffe sind Anilinderivate der Formel III als Kupplungskomponenten sehr wertvoll, bei denen $Z^1$ und $Z^2$ in den Kombinationen $Z^1/Z^2$ H/H; $CH_3$/H; $C_2H_5$/H; (n)$C_3H_7$/H; (i)$C_3H_7$/H; $C_3H_7O$/H; $CH_3O$/H; $C_2H_5O$/H; Cl/H; Br/H, H/$CH_3$; H/$C_2H_5$; H/$CH_3O$; H/$C_2H_5O$ H/Cl und H/Br vorliegen, wobei jeweils der Substituent $R^1$ die folgenden Bedeutungen hat:

Acetoxyäthyl, Propionyloxyäthyl, Butyryloxyäthyl, Isobutyryloxyäthyl, Methylaminocarbonyloxyäthyl, Äthylaminocarbonyloxyäthyl, Propylaminocarbonyloxyäthyl, Isopropylaminocarbonyloxyäthyl, Butylaminocarbonyloxyäthyl, Isobutylaminocarbonyloxyäthyl, sec.-Butylaminocarbonyläthyl, tert.-Butylaminocarbonyloxyäthyl, Hydroxyäthoxyäthyl, Methoxycarbonyläthyl, Äthoxycarbonyläthyl, Propoxycarbonyläthyl, Isopropoxycarbonyläthyl, Butoxycarbonyläthyl, Isobutoxycarbonyläthyl, sec.-Butoxycarbonyläthyl, tert.-Butoxycarbonyläthyl, Methoxyäthyl, Äthoxyäthyl, Propoxyäthyl, Isopropoxyäthyl, Butoxyäthyl, Isobutoxyäthyl, sec.-Butoxyäthyl, tert.-Butoxyäthyl, Methoxyäthoxyäthyl, Äthoxyäthoxyäthyl, Propoxyäthoxyäthyl, Isopropoxyäthoxyäthyl, Butoxyäthoxyäthyl, Isobutoxyäthoxyäthyl, sec.-Butoxyäthoxyäthyl, tert.-Butoxyäthoxyäthyl, und unabhängig von der Bedeutung von Z und $R^1$ für $R^2$ folgende Reste stehen können: Methyl, Äthyl, Propyl, Isopropyl, (n)Butyl, Isobutyl, sec.-Butyl, tert.-Butyl, Allyl, Methallyl, Crotyl, Hydroxyäthoxyäthyl, Methoxyäthoxyäthyl, Äthoxyäthoxyäthyl, Propoxyäthoxyäthyl, Isopropoxyäthoxyäthyl, Butoxyäthoxyäthyl, Isobutoxyäthoxyäthyl, sec.-Butoxyäthoxyäthyl, tert.-Butoxyäthoxyäthyl.

Die erfindungsgemässen Farbstoffe eignen sich insbesondere zum Färben und Bedrucken von Materialien aus hydrophoben Fasern oder Folien aus beispielsweise Cellulose-2 ½-acetat, Cellulosetriacetat und insbesondere Polyestermaterialien, z.B. Polyäthylenglykolterephthalat oder analogen Polymeren. Sie liefern hierauf nach den üblichen Färbe- und Druckverfahren farbstarke rubinrote bis marineblaue Färbungen und Drucke mit sehr guten Echtheitseigenschaften.

Die Fasermaterialien können in allen Verarbeitungszuständen vorliegen, wie z.B. Kabel, Kammzug, Fäden, Garne, Stränge, Spulen, Muffs, Gewebe, Gewirke oder gebundene oder nicht gebundene «Non Wovens».

Die Folien können als solche vorliegen oder in einem beliebigen Stadium der Weiterverarbeitung z.B. als geschnittene glatte oder verdrillte Streifen und daraus hergestellte Erzeugnisse.

Die Materialien aus hochmolekularen Polyestern können auch in Mischung mit anderen Materialien, wie z.B. natürlichen Fasern vorliegen. Derartige natürliche Fasern sind z.B. Eiweissfasern, wie Seide oder Wolle und insbesondere natürliche oder regenerierte Zellulosefasern, vorzugsweise Baumwolle.

Das Färben des genannten Fasergutes mit den erfindungsgemässen Farbstoffen erfolgt zweckmässig aus wässriger Suspension in Gegenwart von Carriern zwischen etwa 80 bis 100°C, in Abwesenheit von Carriern zwischen etwa 110 bis 140°C sowie nach dem sogenannten Thermofixierverfahren bei etwa 180 bis 230°C. Das Bedrukken der genannten Materialien kann so durchgeführt werden, dass die mit den neuen Farbstoffen bedruckte Ware in Gegenwart eines Carriers bei Temperaturen zwischen etwa 80 bis 110°C oder auch in Abwesenheit eines Carriers bei etwa 110 bis 140°C gedämpft oder auch nach dem sogenannten Thermofixierverfahren bei etwa 180 bis 230°C behandelt wird.

Die erfindungsgemässen Farbstoffe eignen sich auch zum Färben der vorstehend aufgeführten hydrophoben Materialien aus organischen Lösungsmitteln und zum Färben in der Masse.

Die Farbstoffe der Formel I sind in Wasser unlöslich. Zur einfachen Herstellung der zum Färben eingesetzten wässrigen Suspensionen werden die Farbstoffe daher zweckmässigerweise in Form von Zubereitungen benutzt, in denen sie in feiner Verteilung mit Teilchengrössen von 0,1 bis 10 µ, vorzugsweise von 0,5 bis 2 µ vorliegen.

Die Zubereitungen werden erhalten, indem man die Farbstoffe zusammen mit Flüssigkeiten, vorzugsweise mit Wasser, gegebenenfalls in Gegenwart bekannter Dispergiermittel bis auf die gewünschte Teilchengrösse zerkleinert.

Neben dem sehr guten Aufbauvermögen und sehr grosser Farbstärke besitzen die erfindungsgemässen Farbstoffe eine sehr gute Licht- und Thermofixierechtheit und eine hohe pH-Beständigkeit, ferner auch sehr gute Echtheitseigenschaften bei der Wäsche 95°C, gegenüber Peroxiden, Schweiss sauer und insbesondere alkalisch, Stickoxiden, Abgasen, Alkali, bei der Sodakochechtheit, bei der Hypochlorit-Bleichechtheit bei schwerer Beanspruchung, bei der Reibechtheit und bei der Koratronechtheit.

Beispiel 1

a) 30,2 g 2,5-Dimethoxy-4-amino-4'-nitroazobenzol werden in 1000 ml Wasser und 30 ml konz. Salzsäure durch Zugabe von 9,7 g Natriumnitrit innerhalb 1 Stunde bei 40 bis 50°C diazotiert und bei 0–5°C eingetragen in eine Mischung aus 23,2 g N-(2-Acetoxyäthyl)-N-äthyl-m-toluidin, 300 ml Butanol und 30 g wasserfreiem Natriumacetat. Der Ansatz wird über Nacht durchgerührt und der entstandene Farbstoff abgesaugt, mit heissem Butanol und Wasser ausgewaschen und getrocknet. Sofern eine Reinigung erwünscht ist, kann diese durch Umkristallisieren aus n.Butanol erfolgen. Er stellt ein schwärzliches Pulver dar, das sich mit blauvioletter Farbe in konzentrierter Schwefelsäure löst und bei 168°C schmilzt.

b) 1,0 g des im Abschnitt a) hergestellten Farbstoffs der Formel

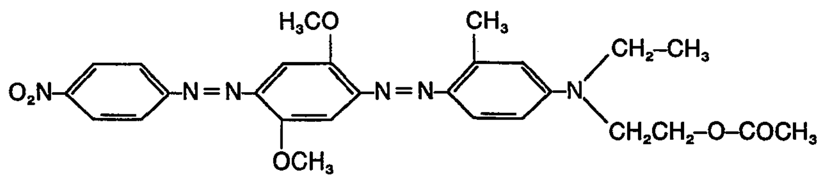

wird in feindispergierter Form in 2000 g Wasser eingerührt. Es wird mit Essigsäure auf einen pH-Wert von 5–6 eingestellt und mit 4,0 g Ammoniumsulfat und 2,0 g eines handelsüblichen Dispergiermittels auf Basis eines Naphthalinsulfonsäure-Formaldehyd-Kondensats versetzt.

In die so erhaltene Färbeflotte bringt man 100 g eines Polyestergewebes auf Basis von Polyäthylenglykolterephthalat ein und färbt 1 Stunde bei 130°C.

Nach anschliessendem Spülen, reduktiver Nachbehandlung mit einer 0,2%igen alkalischen Natriumdithionitlösung während 15 Minuten bei 70–80°C, Spülen und Trocknen, erhält man eine farbstarke blauviolette Färbung mit sehr guten coloristischen Eigenschaften, insbesondere einer sehr guten Licht- und Thermofixierechtheit.

Der in diesem Beispiel verwendete Farbstoff wurde wie folgt hergestellt:

Beispiel 2

a) 30,2 g 2,5-Dimethoxy-4-amino-4'-nitroazobenzol werden in 300 ml Eisessig durch Zugabe von 7,7 g Natriumnitrit unter äusserer Kühlung bei 15°C diazotiert und bei 20–25°C eingetragen in eine Mischung aus 21,7 g N-(2-Methoxycarbonyläthyl)-N-äthylanilin, 300 ml Eisessig und 40 g wasserfreiem Natriumacetat. Nach einstündigem Nachrühren wird der entstandene Farbstoff abgesaugt, mit Wasser ausgewaschen und getrocknet. Sofern eine Reinigung erwünscht ist, kann diese durch Umkristallisieren aus n.Butanol erfolgen. Er stellt ein schwärzliches Pulver dar, das sich mit blauvioletter Farbe in konzentrierter Schwefelsäure löst und bei 165°C schmilzt.

b) Ein Gewebe aus Polyäthylenglykolterephthalat wird auf dem Foulard bei 30°C mit einer Flotte geklotzt, die 30,0 g des in Abschnitt a) hergestellten und in feine Verteilung gebrachten Farbstoffs der Formel

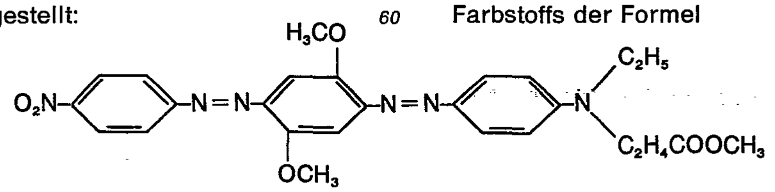

1,0 g Polyacrylamid vom K-Wert 120 und 0,5 g eines Polyglykoläthers des Oleylalkohols und 968,5 g Wasser enthält. Nach dem Trocknen wird 60 Sekunden bei 210°C im Thermofixierrahmen fixiert. Nach anschliessendem Spülen und nach Fertigstellung, wie im Beispiel 1, Absatz 3, beschrieben, erhält man eine farbstarke blaugraue Färbung von sehr guten Echtheitseigenschaften.

Beispiel 3

a) In Analogie zur Arbeitsweise der Beispiele 1 und 2, jedoch unter Verwendung von 22,4 g N-(2-Methylaminocarbonyloxyäthyl)-N-äthylanilin als Kupplungskomponente lässt sich der Farbstoff der Formel

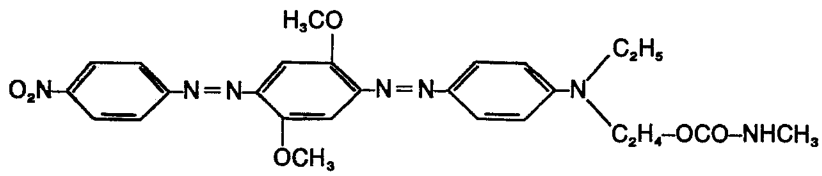

herstellen. Er stellt ebenfalls ein schwärzliches Pulver dar, das sich mit blauvioletter Farbe in konzentrierter Schwefelsäure löst und bei 176°C schmilzt.

b) 30,0 g des im Abschnitt a) hergestellten Farbstoffs werden in feiner Verteilung einer Druckpaste, die 45,0 g Johannisbrotkernmehl, 6,0 g 3-nitrobenzol-sulfonsaures Natrium und 3,0 g Zitronensäure auf 1000 g enthält, einverleibt. Mit dieser Druckpaste erhält man auf einem Polyestergewebe nach dem Bedrucken, Trocknen und Fixieren im Thermofixierrahmen während 45 Sekunden bei 215°C, Spülen und Fertigstellung, wie im Beispiel 1, Absatz 3, beschrieben, einen farbstarken blauvioletten Druck von sehr guten coloristischen Eigenschaften, insbesondere einer sehr guten Licht- und Thermofixierechtheit.

In der folgende Tabelle sind weitere erfindungsgemässe Farbstoffe aufgeführt, die in Analogie zu den Ausführungsbeispielen 1 bis 3, Abschnitt a), hergestellt und gemäss den Abschnitten b) appliziert werden können. Auch diese Farbstoffe liefern hervorragend farbstarke, licht- und trockenhitzefixierechte Färbungen und Drucke.

Tabelle

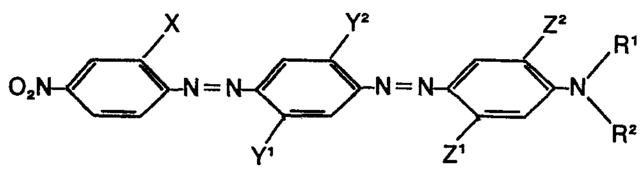

| | X | $Y^1$ | $Y^2$ | $Z^1$ | $Z^2$ | $R^1$ | $R^2$ | Nuance auf Polyester |
|---|---|---|---|---|---|---|---|---|
| 1 | H | $CH_3$ | $CH_3$ | H | H | $(CH_2)_2O(CH_2)_2OH$ | $(CH_2)_2(CH_2)_2OH$ | 1 |
| 2 | Cl | $CH_3$ | $OCH_3$ | Cl | H | $(CH_2)_2OCOC_3H_7$ | $CH_3$ | 2 |
| 3 | $CH_3$ | $OCH_3$ | $OCH_3$ | $CH_3$ | H | $(CH_2)_2OCOCH_3$ | $CH_3$ | 2 |
| 4 | $CH_3$ | $OCH_3$ | $OCH_3$ | $OCH_3$ | H | $(CH_2)_2OC_2H_5$ | $CH(CH_3)C_2H_5$ | 2 |
| 5 | Cl | $CH_3$ | $OCH_3$ | H | H | $(CH_2)_2OCONHCH(CH_3)C_2H_5$ | $CH_2CH=CH_2$ | 3 |
| 6 | H | $OCH_3$ | $OCH_3$ | H | H | $(CH_2)_2OC_2H_5$ | $C_2H_5$ | 2 |
| 7 | H | $OC_2H_5$ | $OC_2H_5$ | H | H | $(CH_2)_2O(CH_2)_2OH$ | $C_3H_7$ | 2 |
| 8 | H | $OCH_3$ | $OCH_3$ | $C_2H_5$ | H | $(CH_2)_4O(CH_2)_2OCH_3$ | $CH_2-CH=CH_2$ | 2 |
| 9 | $CH_3$ | $OCH_3$ | $OCH_3$ | H | H | $(CH_2)_2OCONHC_2H_5$ | $(CH_2)_2OC_3H_7$ | 2 |
| 10 | $C_2H_5$ | $OC_3H_7$ | $OC_3H_7$ | H | $CH_3$ | $(CH_2)_2O(CH_2)_2OCH_3$ | $(CH_2)_2O(CH_2)_2OCH_3$ | 1 |
| 11 | Cl | $OCH_3$ | $OCH_3$ | Cl | H | $(CH_2)_2OCOCH_3$ | $C_4H_9$ | 4 |
| 12 | Br | $OCH_3$ | $OCH_3$ | i-$C_3H_7$ | H | $(CH_2)_2COOC_3H_7$ | $C_3H_7$ | 2 |
| 13 | CN | $OCH_3$ | $OCH_3$ | H | H | $CH(CH_3)CH_2COOC_2H_5$ | $CH_2CH=CH-CH_3$ | 2 |
| 14 | CN | $OC_2H_5$ | $OC_2H_5$ | $CH_3$ | H | $(CH_2)_2O(CH_2OC_2H_5$ | $CH_3$ | 3 |
| 15 | H | $CH_3$ | $OCH_3$ | H | H | $(CH_2)_2OCOCH_3$ | $(CH_2)_2O(CH_2)_2OC_2H_5$ | 1 |
| 16 | H | $CH_3$ | $OCH_3$ | H | H | $(CH_2)_2COOCH_3$ | $C_2H_5$ | 1 |
| 17 | H | $CH_3$ | $OCH_3$ | $C_2H_5$ | H | $(CH_2)_3OCONHC_4H_9$ | $CH_2CH=CH_2$ | 1 |
| 18 | H | $CH_3$ | $OC_2H_5$ | H | $C_2H_5$ | $(CH_2)_2OCONHC_4H_9$ | $C_3H_7$ | 5 |
| 19 | H | $CH_3$ | $OCH_3$ | H | H | $(CH_2)_2OC_2H_5$ | $C_3H_7$ | 4 |
| 20 | H | $CH_3$ | $OCH_3$ | $OC_2H_5$ | H | $(CH_2)_2OCOCH_3$ | $(CH_2)_2O$i-$C_3H_7$ | 2 |
| 21 | $C_3H_7$ | $C_2H_5$ | $OCH_3$ | Br | H | $(CH_2)_2O(CH_2)_2OH$ | $(CH_2)_2O(CH_2)_2OH$ | 4 |
| 22 | Cl | $CH_3$ | $OCH_3$ | $OCH_3$ | H | $(CH_2)_4OCOC_2H_5$ | $C_2H_5$ | 2 |
| 23 | Cl | $CH_3$ | $OCH_3$ | H | H | $(CH_2)_4OCONHC_3H_7$ | $C_2H_5$ | 4 |
| 24 | Br | $CH_3$ | $OCH_3$ | H | H | $(CH_2)_4OCH_3$ | $CH_2-CH=CH_2$ | 4 |

| | X | $Y^1$ | $Y^2$ | $Z^1$ | $Z^2$ | $R^1$ | $R^2$ | Nuance auf Polyester |
|---|---|---|---|---|---|---|---|---|
| 25 | CN | $CH_3$ | $OCH_3$ | $OCH_3$ | H | $(CH_2)_2O(CH_2)_2OH$ | $C_4H_9$ | 3 |
| 26 | $NO_2$ | $CH_3$ | $OCH_3$ | H | H | $(CH_2)_2OCONHi\text{-}C_4H_9$ | $CH_3$ | 7 |
| 27 | $NO_2$ | $C_2H_5$ | $OC_2H_5$ | H | H | $(CH_2)_2OCOi\text{-}C_3H_7$ | $CH_2CH=CH_2$ | 4 |
| 28 | H | $CH_3$ | $CH_3$ | H | H | $(CH_2)_3OCOi\text{-}C_3H_7$ | $CH_2CH=CH_2$ | 1 |
| 29 | H | $C_2H_5$ | $C_2H_5$ | H | H | $(CH_2)_2COOCH_3$ | $C_2H_5$ | 1 |
| 30 | H | $CH_3$ | $CH_3$ | $CH_3$ | H | $(CH_2)_2OCONHC_2H_5$ | $CH_3$ | 6 |
| 31 | $CH_3$ | $CH_3$ | $CH_3$ | $C_2H_5$ | H | $(CH_2)_2O(CH_2)_4OH$ | $C_2H_5$ | 1 |
| 32 | $C_3H_7$ | $C_3H_7$ | $C_3H_7$ | Br | H | $(CH_2)_2OCOCH_3$ | $(CH_2)_2OC_2H_5$ | 6 |
| 33 | Br | $CH_3$ | $CH_3$ | $OCH_3$ | H | $(CH_2)_4OCONHC_3H_7$ | $CH_2CH=CH_2$ | 4 |
| 34 | Br | $CH_3$ | $CH_3$ | H | Br | $(CH_2)_2OCOCH_3$ | $(CH_2)_2OCOCH_3$ | 1 |
| 35 | Cl | $CH_3$ | $CH_3$ | H | H | $(CH_2)_2COOi\text{-}C_3H_7$ | $C_3H_7$ | 1 |
| 36 | CN | $CH_3$ | $CH_3$ | $OC_3H_7$ | H | $(CH_2)_4OCH_3$ | $CH_2CH=CH_2$ | 4 |
| 37 | CN | $CH_3$ | $CH_3$ | H | H | $(CH_2)_2COOC_2H_5$ | $(CH_2)_2COOC_2H_5$ | 6 |
| 38 | $NO_2$ | $C_2H_5$ | $C_2H_5$ | $CH_3$ | H | $(CH_2)_2OCOC_3H_7$ | $C_2H_5$ | 4 |
| 39 | $NO_2$ | $NHCOCH_3$ | H | H | H | $(CH_2)_2OCOCH_3$ | $CH_3$ | 3 |
| 40 | $NO_2$ | $NHCOCH_3$ | Cl | $CH_3$ | H | $(CH_2)_2COOC_2H_5$ | $CH_2CH=CH_2$ | 2 |
| 41 | $NO_2$ | $NHCOC_2H_5$ | H | $C_2H_5$ | H | $(CH_2)_2OC_2H_5$ | $O(CH_2)_2OC_2H_5$ | 2 |
| 42 | $NO_2$ | $NHCOC_3H_7$ | Cl | $OCH_3$ | H | $(CH_2)_2O(CH_2)_2OH$ | $C_2H_5$ | 3 |
| 43 | CN | $NHCOC_2H_5$ | H | H | H | $(CH_2)_2OCONHC_2H_5$ | $C_3H_7$ | 2 |
| 44 | CN | $NHCOi\text{-}C_3H_7$ | H | H | H | $(CH_2)_3OCOC_3H_7$ | $(CH_2)_2OCH_3$ | 2 |
| 45 | CN | $NHCOC_2H_5$ | Cl | H | Cl | $(CH_2)_2OCOCH_3$ | $C_2H_5$ | 4 |

Die Zahlen in der Spalte «Nuance auf Polyester» haben folgende Bedeutung:

1 = rotviolett  5 = braun
2 = rotstichig marine  6 = rubin
3 = marine  7 = rotstichig violett
4 = violett

**Patentansprüche**

1. Wasserunlösliche Disazofarbstoffe der Formel I

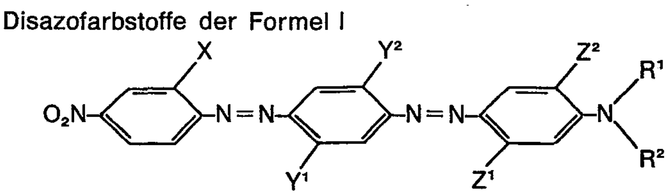

(I)

worin X Wasserstoff, Alkyl mit 1 bis 3 C-Atomen, Chlor, Brom, Nitro oder Cyan; $Y^1$ und $Y^2$ unabhängig voneinander Alkyl mit 1 bis 3 C-Atomen oder Alkoxy mit 1 bis 3 C-Atomen bedeuten und, sofern X eine Nitro- oder Cyangruppe ist, $Y^1$ auch noch Alkanoylamino mit insgesamt 1 bis 3 C-Atomen im Alkanoylrest und $Y^2$ Wasserstoff oder Chlor bedeutet; $Z^1$ und $Z^2$ Wasserstoff, Alkyl mit 1 bis 3 C-Atomen, Chlor, Brom oder Alkoxy mit 1 bis 3 C-Atomen mit der Einschränkung, dass eine der Bedeutungen von $Z^1$ und $Z^2$ Wasserstoff ist; $R^1$ eine durch Alkoxy mit 1 bis 4 C-Atomen, Alkanoyloxy mit insgesamt 1 bis 4 C-Atomen, Alkylaminocarbonyloxy mit 1 bis 4 C-Atomen in der Alkylgruppe, Alkoxycarbonyl mit 1 bis 4 C-Atomen in der Alkoxygruppe, β-Hydroxyäthoxy oder β-Alkoxyäthoxy mit 1 bis 4 C-Atomen in der Alkoxygruppe substituierte Äthylgruppe und $R^2$ Alkyl mit 1 bis 4 C-Atomen, Alkenyl mit 3 oder 4 C-Atomen, Hydroxyäthoxyäthyl oder Alkoxyäthoxyäthyl mit 1 bis 4 C-Atomen in der Alkoxygruppe bedeuten.

2. Disazofarbstoffe gemäss Anspruch 1, dadurch gekennzeichnet, dass für X, $Y^1$, $Y^2$, $Z^1$ und $Z^2$ stehende Alkylgruppen Methylgruppen und für $Y^1$ und $Y^2$ stehende Alkoxygruppen Methoxygruppen sind.

3. Disazofarbstoffe gemäss den Ansprüchen 1 und 2, dadurch gekennzeichnet, dass $Y^1$ und $Y^2$ Methoxy oder Methyl bedeuten.

4. Disazofarbstoffe gemäss den Ansprüchen 1 und 2, dadurch gekennzeichnet, dass $Y^1$ Alkanoylamino mit 1 bis 3 C-Atomen und $Y^2$ Wasserstoff oder Chlor bedeuten.

5. Verfahren zur Herstellung von wasserunlöslichen Disazofarbstoffen der Formel I

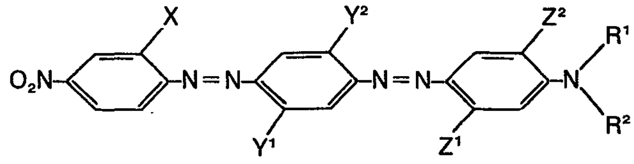

(I)

worin X, $Y^1$, $Y^2$, $Z^1$, $Z^2$, $R^1$ und $R^2$ die in den Ansprüchen 1 bis 4 genannten Bedeutungen haben, dadurch gekennzeichnet, dass eine Aminoazoverbindung der Formel II

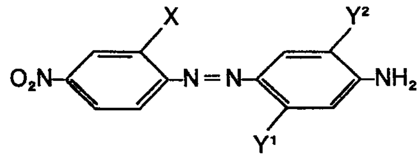

(II)

in an sich bekannter Weise diazotiert und die erhaltene Diazoniumverbindung auf ein Anilinderivat der Formel III

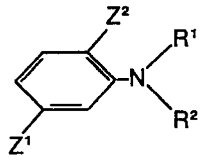

(III)

gekuppelt wird.

6. Verfahren zur Herstellung von wasserunlöslichen Disazofarbstoffen der Formel I

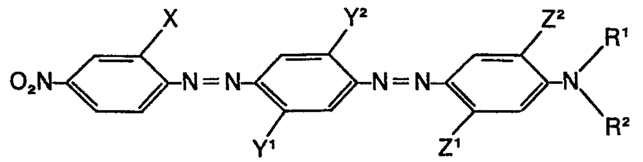

(I)

worin X, $Y^1$, $Y^2$, $Z^1$, $Z^2$ und $R^2$ die in den Ansprüchen 1 bis 4 genannten Bedeutungen haben und $R^1$ ein Äthylrest ist, der durch einen Alkanoyloxyrest mit 1 bis 4 C-Atomen substituiert ist, dadurch gekennzeichnet, dass ein Disazofarbstoff der Formel I, worin X, $Y^1$, $Y^2$, $Z^1$, $Z^2$ und $R^2$ die oben genannten Bedeutungen haben und $R^1$ ein Hydroxyäthylrest ist, mit einem funktionellen Derivat einer Alkancarbonsäure mit insgesamt 1 bis 4 C-Atomen kondensiert wird.

7. Verwendung von wasserunlöslichen Disazofarbstoffen der Formel I gemäss den Ansprüchen 1 bis 6 zum Färben und Bedrucken von Materialien aus hochmolekularen Polyestern, insbesondere solchen auf Basis von Polyäthylenglykolterephthalaten oder Mischungen dieser Materialien mit natürlichen Materialien oder aus Zellulosetriacetat.

**Claims**

1. Water insoluble disazo dyestuffs of the formula I

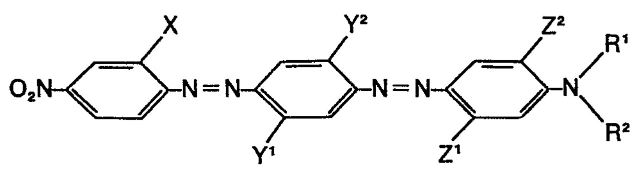

(I)

wherein X denotes hydrogen, alkyl having 1 to 3 C atoms, chlorine, bromine, nitro or cyano; $Y^1$ and $Y^2$ denote independently of one another, alkyl having 1 to 3 C atoms or alkoxy having 1 to 3 C atoms, $Y^1$ additionally also denoting alkanoylamino having a total of 1 to 3 C atoms in the alkanoyl radical if X is a nitro or cyano group and $Y^2$ denotes hydrogen or chlorine; $Z^1$ and $Z^2$ denote hydrogen, alkyl having 1 to 3 C atoms, chlorine, bromine or alkoxy having 1 to 3 C atoms, with the restriction that one of the meanings of $Z^1$ and $Z^2$ is hydrogen; $R^1$ denotes an ethyl group which is substituted by alkoxy having 1 to 4 C atoms, alkanoyloxy having a total of 1 to 4 C atoms, alkylaminocarbonyloxy having 1 to 4 C atoms in the alkyl group, alkoxycarbonyl having 1 to 4 C atoms in the alkoxy group, β-hydroxyethoxy or β-alkoxyethoxy having 1 to 4 C atoms in the alkoxy group; and $R^2$ denotes alkyl having 1 to 4 C atoms, alkenyl having 3 or 4 C atoms, hydroxyethoxyethyl or alkoxyethoxyethyl having 1 to 4 C atoms in the alkoxy group.

2. Disazo dyestuffs according to Claim 1, characterised in that alkyl groups representing X, $Y^1$, $Y^2$, $Z^1$ and $Z^2$ are methyl groups and alkoxy groups representing $Y^1$ and $Y^2$ are methoxy groups.

3. Disazo dyestuffs according to Claims 1 and 2, characterised in that $Y^1$ and $Y^2$ denote methoxy or methyl.

4. Disazo dyestuffs according to Claims 1 and 2, characterised in that $Y^1$ denotes alkanoylamino having 1 to 3 C atoms, and $Y^2$ denotes hydrogen or chlorine.

5. Process for the manufacture or water-insoluble disazo dyestuffs of the formula I

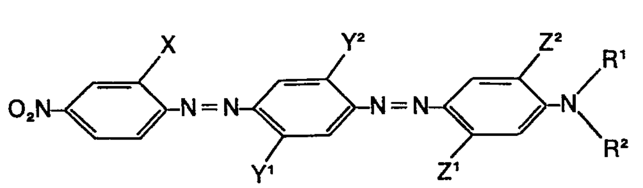

(I)

wherein X, $Y^1$, $Y^2$, $Z^1$, $Z^2$, $R^1$ and $R^2$ have the meanings mentioned in Claims 1 to 4, characterised in that an aminoazo compound of the formula II

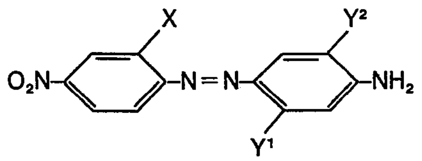 (II)

is diazotized in a manner which is in itself known and the resulting diazonium compound is coupled with an aniline derivative of the formula III

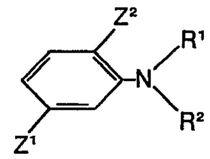 (III)

6. Process for the manufacture of water-insoluble disazo dyestuffs of the formula I

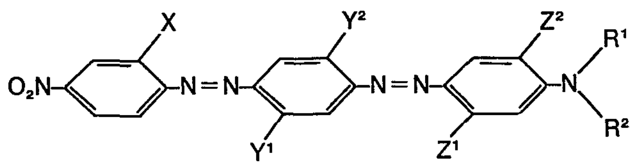 (I)

wherein X, $Y^1$, $Y^2$, $Z^1$, $Z^2$ and $R^2$ have the meanings mentioned in Claims 1 to 4 and $R^1$ is an ethyl radical which is substituted by an alkanoyloxy radical having 1 to 4 C atoms, characterised in that a disazo dyestuff of the formula I wherein X, $Y^1$, $Y^2$, $Z^1$, $Z^2$ and $R^2$ have the abovementioned meanings and $R^1$ is a hydroxyethyl radical is condensed with a functional derivative of an alkanecarboxylic acid having a total of 1 to 4 C atoms.

7. Use of water-insoluble disazo dyestuffs of the formula 1 according to Claims 1 to 6 for dyeing and printing materials made from high-molecular polyesters, in particular materials based on polyethylene glycol terephthalates or mixtures of these materials with natural materials or materials made from cellulose triacetate.

**Revendications**

1. Les colorants disazoïques insolubles dans l'eau de formule ĝeńerale I

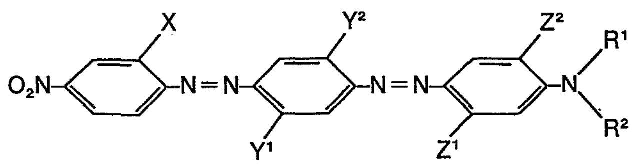 (I)

dans laquelle

X représente l'hydrogène, un alkyle en $C_1$–$C_4$, un atome de chlore ou de brome, le groupe nitro ou cyano; $Y^1$ et $Y^2$ représentent, indépendamment l'un de l'autre, des alkyles ou des alcoxy en $C_1$–$C_3$ et, si X est un groupe nitro ou cyano, $Y^1$ peut encore être un groupe alcanoylamino avec au total 1 à 3 atomes de carbone dans le radical alcanoyle et $Y^2$ l'hydrogène ou le chlore; $Z^1$ et $Z^2$ représentent l'hydrogène, des alkyles en $C_1$–$C_3$, le chlore, le brome ou des alcoxy en $C_1$–$C_3$, avec la condition que l'un d'eux au moins soit l'hydrogène; $R^1$ est un groupe éthyle substitué par un alcoxy en $C_1$–$C_4$, un alcanoyloxy en $C_1$–$C_4$ au total, un alkylaminocarbonyloxy en $C_1$–$C_4$ dans le groupe alkyle, ou encore par un groupe β-hydroxyéthoxy, β-alcoxyéthoxy en $C_1$–$C_4$ dans le groupe alcoxy, ou alcoxycarbonyle en $C_1$–$C_4$ dans le groupe alcoxy, et $R^2$ un alkyle en $C_1$–$C_4$, un alcényle en $C_3$ ou $C_4$, un hydroxyéthoxyéthyle ou un alcoxyéthoxyéthyle en $C_1$–$C_4$ dans le groupe alcoxy.

2. Colorants selon la revendication 1 dans lesquels les groupes alkyles X, $Y^1$, $Y^2$, $Z^1$ et $Z^2$ sont des groupes méthyle et les groupes alcoxy $Y^1$ et $Y^2$ sont des groupes méthoxy.

3. Colorants selon la revendication 1 ou 2 dans lesquels $Y^1$ et $Y^2$ sont des groupes méthoxy ou méthyle.

4. Colorants selon la revendication 1 ou 2 dans lesquels $Y^1$ est un alcanoylamino en $C_1$–$C_3$ et $Y^2$ un atome d'hydrogène ou de chlore.

5. Procédé de préparation des colorants selon l'une quelconque des revendications 1 à 4, caractérisé en ce que l'on diazote de manière connue un composé aminoazoïque de formule II

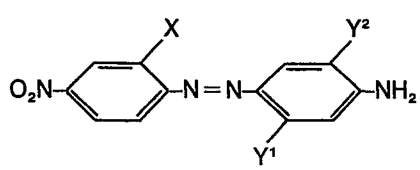 (II)

et on copule le composé de diazonium ainsi formé avec un dérivé d'aniline de formule III

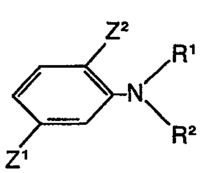 (III)

6. Procédé de préparation des colorants de formule I selon la revendication 1 dans lesquels les symboles X, $Y^1$, $Y^2$, $Z^1$, $Z^2$ et $R^2$ ont les significations données à l'une quelconque des revendications 1 à 4 et $R^1$ est un radical éthyle substitué par un alcanoyloxy en $C_1$–$C_4$, procédé caractérisé en ce que l'on condense un colorant disazoïque de formule I dans lequel X, $Y^1$, $Y^2$, $Z^1$, $Z^2$ et $R^2$ ont les significations indiquées et $R^1$ représente un groupe hydroxyéthyle, avec un dérivé fonctionnel d'un acide alcane-carboxylique ayant au total de 1 à 4 atomes de carbone.

7. L'utilisation des colorants disazoïques insolubles dans l'eau de formule I selon l'une quelconque des revendications 1 à 6, pour la teinture et l'impression de matières en polyesters macromoléculaires, en particulier à base de téréphtalate de polyéthylène-glycol, ou de mélanges de ces matières avec des matières naturelles ou en triacétate de cellulose.